# EUROPÄISCHE PATENTSCHRIFT

(11) **EP 3 938 221 B1**
(45) Veröffentlichungstag und Bekanntmachung des Hinweises auf die Patenterteilung: **25.10.2023**
(21) Anmeldenummer: 20707180.4
(22) Anmeldetag: 20.02.2020
(51) Int. Cl.: B60B 29/00

(54) **MOBILTEIL MIT ZUMINDEST EINEM AUF DEM MOBILTEIL ANGEORDNETEN AUFSATZMODUL**
MOVABLE DEVICE WITH AT LEAST ONE TOP-PART MODULE
DISPOSITIF MOBILE AVEC AU MOINS UN MODULE MONTÉ DESSUS

(30) Priorität: 15.03.2019 DE 102019001824
(43) Veröffentlichungstag der Anmeldung: 19.01.2022
(73) Patentinhaber: SEW-EURODRIVE GmbH & Co. KG, 76646 Bruchsal (DE)
(72) Erfinder: NERDING, Uwe, 76646 Bruchsal (DE)
(86) Internationale Anmeldenummer: PCT/EP2020/025081
(87) Internationale Veröffentlichungsnummer: WO 2020/187446

(56) Entgegenhaltungen:
- DE-A1- 2 159 082
- US-A1- 2012 057 954

## Beschreibung

Die Erfindung betrifft ein Mobilteil mit zumindest einem auf dem Mobilteil angeordneten Aufsatzmodul.

**Aus der** DE 21 59 082 A **ist ein von einem Bediener verschiebbarer, antriebsloser Radmontage-Hubwagen bekannt.**

**Aus der** US 2012/057954 A **ist als nächstliegender Stand der Technik eine Anordnung zum Positinieren eines Rades für die Radmontage bekannt.**

Es ist allgemein bekannt, dass als fahrerloses Transportsysteme ausgeführte Mobilteile in einer Anlage zum intralogistischen Transport verwendbar sind.

Der Erfindung liegt daher die Aufgabe zugrunde, die Automatisierung in der Kraftfahrzeugindustrie verbessert wird.

Erfindungsgemäß wird die Aufgabe bei dem Mobilteil nach den in Anspruch 1 angegebenen Merkmalen gelöst.

Wichtige Merkmale der Erfindung bei dem Mobilteil sind, dass das Mobilteil mit zumindest einem auf dem Mobilteil angeordneten, insbesondere montierten, Aufsatzmodul ausgeführt ist,
wobei das Aufsatzmodul eine Grundplatte aufweist und eine Radaufnahmeeinheit (Radaufnahmeteil) aufweist,
wobei auf der Grundplatte eine erste Linearführung angeordnet ist,
wobei eine zweite Linearführung gegenüber der ersten Linearführung bewegbar angeordnet ist,
wobei die Radaufnahmeeinheit über eine dritte Linearführung bewegbar angeordnet ist, welche gegenüber der zweiten Linearführung bewegbar angeordnet ist,
wobei jede der Linearführung zu jeder anderen der Linearführunge einen nicht verschwindenden Winkel aufweist, insbesondere einen rechten Winkel aufweist.

Von Vorteil ist dabei, dass das Mobilteil das Rad aus dem Lager herantransportiert und eine Feinpositionierung zusätzlich ermöglicht ist. Somit muss das Mobilteil nur etwa Zentimetergenau positionieren und mittels der Betätigung der Linearführungen ist eine Millimetergenaue Positionierung ausführbar. Von Vorteil ist dabei, dass eine vollautomatische Feinpositionierung ausführbar ist. Somit ist das Anschrauben der Schraubmuttern zum Befestigen des Rades auf dem Wellenflanschteil von einem Roboter ausführbar, der statt des Werkers ein geeignetes Schraubwerkzeug aufweist.

Bei einer vorteilhaften Ausgestaltung ist die Grundplatte mit dem Fahrgestell des Mobilteils verbunden, insbesondere wobei die Grundplatte mit der Oberseite des Fahrgestells verbunden ist, insbesondere mittels Schrauben schraubverbunden ist. Von Vorteil ist dabei, dass eine einfache aber sichere Aufnahme des Aufsatzmoduls an der Oberseite des Fahrgestells des Mobilteils ermöglicht ist.

Bei einer vorteilhaften Ausgestaltung ist eine oder mehrere der Linearführungen mittels eines, insbesondere mittels eines einzigen, Arretierstiftes fixierbar. Von Vorteil ist dabei, dass die Sicherheit erhöht ist. Während der Fahrt des Mobilteils ist somit ein unbeabsichtigtes Lösen des Rades verhinderbar.

Bei einer vorteilhaften Ausgestaltung weist die Radaufnahmeeinheit eine insbesondere konkave Aufnahmefläche für ein Rad auf. Von Vorteil ist dabei, dass eine Selbstzentrierung ermöglicht ist.

Bei einer vorteilhaften Ausgestaltung ist die Aufnahmefläche konkav ausgeführt. Von Vorteil ist dabei, dass das Rad Selbs zentrierend gelagert ist.

Bei einer vorteilhaften Ausgestaltung weist die Aufnahmefläche Rollen auf, so dass das in der Aufnahmefläche aufgenommene Rad um seine Radachse im Wesentlichen kraftfrei drehbar ist, solange das Rad nicht schraubverbunden mit einem Wellenteil eines Kraftfahrzeugs ist. Von Vorteil ist dabei, dass das Rad nicht nur in der konkaven Aufnahmefläche selbstzentrierend, sondern auch drehbar aufgenommen ist.

Bei einer vorteilhaften Ausgestaltung begrenzt auf der von der dritten Linearführung abgewandten Seite des Radaufnahmeteils ein Begrenzungsteil das in der Aufnahmefläche aufgenommene Rad, insbesondere in axialer Richtung, also in Richtung der Radachse. Von Vorteil ist dabei, dass das Rad gegen Herunterfallen gesichert ist.

Bei einer vorteilhaften Ausgestaltung weist das Mobilteil an seiner Unterseite eine Sekundärwicklung auf zur berührungslosen Übertagung elektrischer Leistung von einem am Boden, also an der Verfahrebene verlegten, langgestreckt ausgeführten Primärleiter an die Sekundärwicklung. Von Vorteil ist dabei, dass eine berührungslose Übertragung elektrischer Leistung ermöglicht ist.

Bei einer vorteilhaften Ausgestaltung weist das Mobilteil eine Steuerung auf, mit welcher eine Lenkung und ein Fahrantrieb des Mobilteils steuerbar sind. Von Vorteil ist dabei, dass das Mobilteil als automatisch geführtes Fahrzeug oder als fahrerloses Transportsystem verwendbar ist.

Bei einer vorteilhaften Ausgestaltung ist eine Griffstange mit dem Radaufnahmeteil fest verbunden. Von Vorteil ist dabei, dass eine einfache sichere Positionierung ausführbar ist.

Bei einer vorteilhaften Ausgestaltung fungiert eine der Linearführungen, insbesondere die dritte Linearführung, als Hubvorrichtung für die Radaufnahmeeinheit, wobei die Hubvorrichtung ein Gegengewicht aufweist, so dass die Positionierung der Radaufnahmeeinheit im Wesentlichen kraftfrei ermöglicht ist. Von Vorteil ist dabei, dass ein kraftfreies Positionieren ermöglicht ist, also nur Reibungskräfte zu überwinden sind und keine Schwerkraft.

Wichtige Merkmale bei einem erfindungsgemäßen Verfahren zum Montieren eines Rads an ein Kraftfahrzeug mit Hilfe des Mobilteils sind, dass das Mobilteil ein in der Radaufnahmeeinheit des Aufsatzmoduls aufgenommenes Rad zum Montagebereich transportiert,
wobei im Montagebereich das Rad an das Kraftfahrzeug, insbesondere an ein Wellenflanschteil des Kraftfahrzeugs, anmontiert wird,
- indem zuerst eine Arretierung, insbesondere ein Arretierstift, gelöst wird,
- indem danach das Rad zu einer Position kraftfrei verschoben wird, bei welcher das Rad in Flucht zur Drehachse eines Wellenflanschteils ist,
- indem zuletzt das Rad an das Wellenflanschteil, insbesondere mittels Schraubmuttern und Schrauben, anmontiert wird.

Von Vorteil ist dabei, dass das Rad automatisiert aus dem Lager herangebracht und kraftfrei in die Montageposition bringbar ist.

Bei einer vorteilhaften Ausgestaltung wird die Arretierung mittels eines Sensors überwacht und eine Weiterfahrt des Mobilteils erfolgt in Abhängigkeit vom Signal des Sensors. Von Vorteil ist dabei, dass die Sicherheit weiter verbessert ist.

Weitere Vorteile ergeben sich aus den Unteransprüchen. Die Erfindung ist nur durch den Schutzumfang der Ansprüche eingeschränkt.

Die Erfindung wird nun anhand von schematischen Abbildungen näher erläutert:

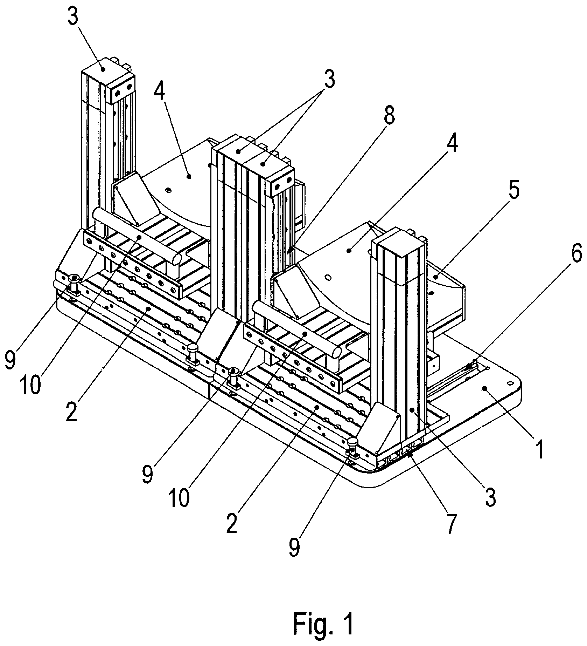

In der Figur 1 sind zwei erfindungsgemäße Aufsatzmodule für ein intralogistisches Mobilteil in Schrägansicht dargestellt.

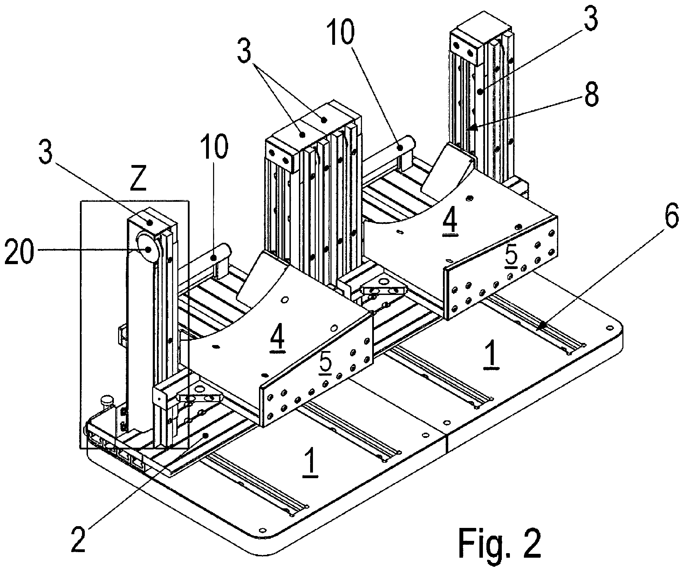

In der Figur 2 sind die Aufsatzmodule aus einem anderen Blickwinkel und teilweise angeschnitten dargestellt.

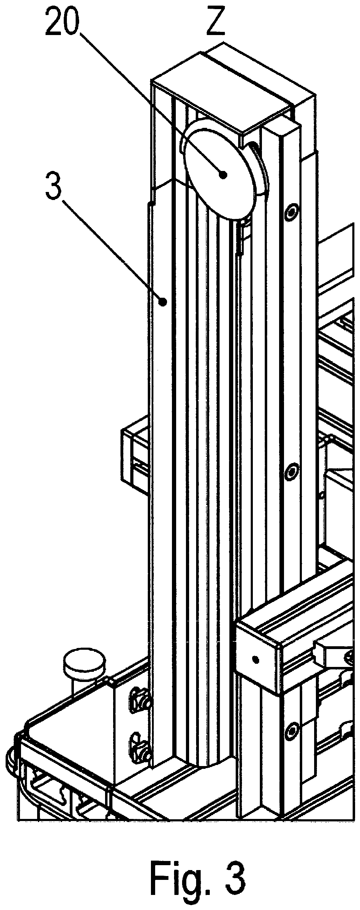

In der Figur 3 ist der angeschnittene Bereich der Figur 2 vergrößert dargestellt.

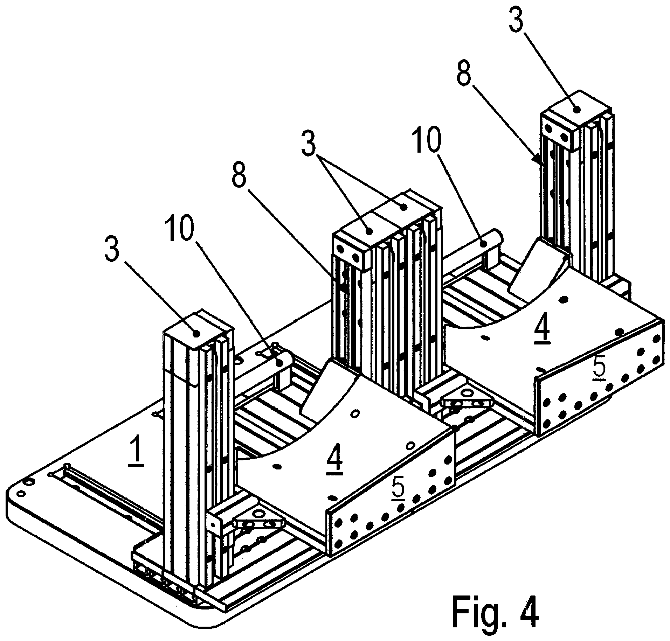

In der Figur 4 sind die Aufsatzmodule in anderer Stellung dargestellt.

Wie in den Figuren dargestellt, sind die beiden Aufsatzmodule gleichartig ausgeführt, also identisch zueinander.

Ein nicht in den Figuren dargestelltes Mobilteil dient zur Aufnahme der Aufsatzmodule auf seiner Oberseite.

Das Mobilteil weist einen Fahrantrieb, insbesondere Traktionsantrieb, eine Lenkung und einen Energiespeicher sowie eine Steuerung auf. Außerdem ist an der Unterseite des Mobilteils eine Sekundärspule angeordnet, welche induktiv koppelbar ist an einen am Boden verlegten, langgestreckt ausgeführten Primärleiter, in welchen ein Wechselstrom eingeprägt wird.

Der Sekundärspule ist eine Kapazität in Reihe oder parallel zugeschaltet, so dass die Resonanzfrequenz des so gebildeten Schwingkreises der Frequenz des Wechselstroms gleicht. Somit ist elektrische Leistung vom Primärleiter zum Mobilteil mit hohem Wirkungsgrad auch bei schwacher und/oder schwankender induktiver Kopplung übertragbar.

Aus dem Schwingkreis wird der Energiespeicher über einen Gleichrichter und einen DC/DC-Wandler und/oder Laderegler versorgt.

Aus dem Energiespeicher wird der Fahrantrieb, insbesondere zumindest ein Rad des Mobilteils antreibender Elektromotor, gespeist sowie die Steuerung und Lenkung versorgt.

Auf der Oberseite des Mobilteils sind die Aufsatzmodule, insbesondere eine jeweilige Grundplatte 1 des jeweiligen Aufsatzmoduls, anmontiert, insbesondere angeschraubt.

Das Mobilteil führt intralogistische Transporte aus. Beispielsweise fährt es in ein Lager, in welchem es mit einem oder mehr Rädern befüllt wird.

Dabei wird ein Rad, insbesondere Rad eines Kraftfahrzeugs, wie PKW, LKW oder dergleichen, auf einem Radaufnahmeteil 4 des Aufsatzmoduls aufgenommen.

Danach fährt das Mobilteil eigenständig, also automatisch, vorzugsweise entlang dem am Boden verlegten Primärleiter zu einer Montageposition. Dort wird das Radaufnahmeteil 4 samt Rad derart positioniert, dass die Drehachse des Rads in Flucht mit einem Wellenflansch, insbesondere des Kraftfahrzeugs, ist und somit mittels auf Gewindestifte angeschraubten Schraubmuttern angeschraubt werden kann an den Wellenflansch.

Zur Positionierung ist das Radaufnahmeteil 4 mittels dreier, jeweils zueinander senkrecht ausgerichteter Linearführungen relativ zur Grundplatte 1 bewegbar.

Die Grundplatte 1 ist mittels Schrauben an die Oberseite, insbesondere des Fahrgestells, des Mobilteils angeschraubt.

Die Grundplatte 1 weist eine Nut auf, in welcher die erste Linearführung 6 angeordnet ist, Dabei ist die Linearachse parallel zur Achse des Rads.

Die erste Linearführung 6 weist einen Führungswagen auf, welcher in der Nut linear bewegbar ist. Der Führungswagen weist an seiner von der Grundplatte abgewandten Seite weitere Räder auf, welche in einer Nut einer Schiebeplatte linear bewegbar sind. Somit ist eine zweite Linearführung realisiert.

Die Nut der Schiebeplatte 2 ist senkrecht zur Nut der Grundplatte 1 gerichtet.

Auf der Schiebeplatte 2 sind Haltesäulen 3 befestigt, welche eine Seilrolle 20 aufweist, von der ein Seil umgelenkt wird, das an seinem ersten Ende mit dem Radaufnahmeteil 4 verbunden ist und an seinem anderen Ende mit einem Gegengewicht.

Die Haltesäulen weisen die dritte Linearführung auf, welche senkrecht zu der ersten und senkrecht zu der zweiten Linearführung ausgerichtet ist. Durch das Gegengewicht ist eine beinahe kraftfreie Verschiebung der Radaufnahmeeinheit 4 samt aufgenommenem Rad ermöglicht.

Die Haltesäulen dienen auch als Kippschutz für das aufgenommene Rad, wobei ein Begrenzungsteil 5 auf der von den Haltesäulen 3 abgewandten Seite des Radaufnahmeteils 4 als Begrenzung und/oder Kippschutz fungiert.

Nach dem Anschrauben des Rades an den wellenflansch wird die Radaufnahmeeinheit 4 etwas abgesenkt und dann wieder in ihre Grundposition gefahren. Eine Arretierung erfolgt mit einem Arretierstift, welche die relative Position der Schiebeplatte 2 zur Grundplatte 1 arretiert und/oder fixiert.

Am Radaufnahmeteil 4 ist eine Griffstange 10 befestigt, mit der somit das aufgenommene Rad im Wesentlichen kraftfrei positionierbar ist.

### Bezugszeichenliste

1 Grundplatte
2 Schiebeplatte
3 Haltesäule
4 Radaufnahmeteil
5 Begrenzungsteil
6 erste Linearführung
7 zweite Linearführung
8 dritte Linearführung
9 Arretierstift
10 Griffstange

## Patentansprüche

1. Mobilteil, **insbesondere auf einem Boden verfahrbares Mobilteil,** mit zumindest einem auf dem Mobilteil angeordneten, insbesondere montierten, Aufsatzmodul,
wobei das Aufsatzmodul eine Grundplatte (1) aufweist und eine Radaufnahmeeinheit (4) aufweist,
wobei auf der Grundplatte (1) eine erste Linearführung (6) angeordnet ist,
**dadurch gekennzeichnet, dass** eine zweite Linearführung (7) gegenüber der ersten Linearführung (6) bewegbar angeordnet ist,
und dass die Radaufnahmeeinheit über eine dritte Linearführung (8) bewegbar angeordnet ist, welche gegenüber der zweiten Linearführung (7) bewegbar angeordnet ist, wobei jede der Linearführungen (6, 7, 8) zu jeder anderen der Linearführungen (6, 7, 8) einen nicht verschwindenden Winkel aufweist, insbesondere einen rechten Winkel aufweist.

2. Mobilteil nach einem der vorangegangenen Ansprüche,
**dadurch gekennzeichnet, dass**
die Grundplatte (1) mit dem Fahrgestell des Mobilteils verbunden ist, insbesondere wobei die Grundplatte (1) mit der Oberseite des Fahrgestells verbunden ist, insbesondere mittels Schrauben schraubverbunden ist.

3. Mobilteil nach einem der vorangegangenen Ansprüche,
**dadurch gekennzeichnet, dass**
eine oder mehrere der Linearführungen (6, 7, 8) mittels eines, insbesondere mittels eines einzigen, Arretierstiftes (9) fixierbar ist.

4. Mobilteil nach einem der vorangegangenen Ansprüche,
**dadurch gekennzeichnet, dass**
die Radaufnahmeeinheit eine insbesondere konkave Aufnahmefläche für ein Rad aufweist.

5. Mobilteil nach Anspruch 4,
**dadurch gekennzeichnet, dass**
die Aufnahmefläche konkav ausgeführt ist
und/oder dass
die Aufnahmefläche Rollen aufweist, so dass das in der Aufnahmefläche aufgenommene Rad um seine Radachse im Wesentlichen kraftfrei drehbar ist, solange das Rad nicht schraubverbunden mit einem Wellenteil eines Kraftfahrzeugs ist.

6. Mobilteil nach einem der vorangegangenen Ansprüche,
**dadurch gekennzeichnet, dass**
auf der von der dritten Linearführung (8) abgewandten Seite der Radaufnahmeeinheit (4) ein Begrenzungsteil (5) das in der Aufnahmefläche aufgenommene Rad begrenzt, insbesondere in Axialer Richtung, also in Richtung der Radachse.

7. Mobilteil nach einem der vorangegangenen Ansprüche,
**dadurch gekennzeichnet, dass**
das Mobilteil an seiner Unterseite eine Sekundärwicklung aufweist zur berührungslosen Übertragung elektrischer Leistung von einem am Boden, also an der Verfahrebene verlegten, langgestreckt ausgeführten Primärleiter an die Sekundärwicklung.

8. Mobilteil nach einem der vorangegangenen Ansprüche,
**dadurch gekennzeichnet, dass**
das Mobilteil eine Steuerung aufweist, mit welcher eine Lenkung und ein Fahrantrieb des Mobilteils steuerbar sind.

9. Mobilteil nach einem der vorangegangenen Ansprüche,
**dadurch gekennzeichnet, dass**
eine Griffstange (10) mit der Radaufnahmeeinheit (4) fest verbunden ist.

10. Mobilteil nach einem der vorangegangenen Ansprüche,
**dadurch gekennzeichnet, dass**
eine der Linearführungen (6, 7, 8), insbesondere die dritte Linearführung (8), als Hubvorrichtung für die Radaufnahmeeinheit fungiert,
wobei die Hubvorrichtung ein Gegengewicht aufweist, so dass die Positionierung der Radaufnahmeeinheit im Wesentlichen kraftfrei ermöglicht ist.

11. Verfahren zum Montieren eines Rads an ein Kraftfahrzeug mit Hilfe eines Mobilteils nach einem der vorangegangenen Ansprüche,
**dadurch gekennzeichnet, dass**
das Mobilteil ein in der Radaufnahmeeinheit des Aufsatzmoduls aufgenommenes Rad zum Montagebereich transportiert,
wobei im Montagebereich das Rad an das Kraftfahrzeug, insbesondere an ein Wellenflanschteil des Kraftfahrzeugs, anmontiert wird,
- indem zuerst eine Arretierung, insbesondere ein Arretierstift (9), gelöst wird,
- indem danach das Rad zu einer Position kraftfrei verschoben wird, bei welcher das Rad in Flucht zur Drehachse eines Wellenflanschteils ist,
- indem zuletzt das Rad an das Wellenflanschteil, insbesondere mittels Schraubmuttern und Schrauben, anmontiert wird.

12. Verfahren nach einem der vorangegangenen Ansprüche,
**dadurch gekennzeichnet, dass**
die Arretierung mittels eines Sensors überwacht wird und eine Weiterfahrt des Mobilteils in Abhängigkeit vom Signal des Sensors erfolgt.

## Claims

1. A mobile part, in particular mobile part which can travel on a floor, having at least one attachment module arranged, in particular mounted, on the mobile part,
wherein the attachment module has a base plate (1) and a wheel receiving unit (4),
wherein a first linear guide (6) is arranged on the base plate (1),
**characterised in that** a second linear guide (7) is arranged movably relative to the first linear guide (6),
and **in that**
the wheel receiving unit is arranged movably via a third linear guide (8) which is arranged movably relative to the second linear guide (7),
wherein each of the linear guides (6, 7, 8) is at a non-vanishing angle, in particular is at a right angle, to each other one of the linear guides (6, 7, 8).

2. A mobile part according to one of the preceding claims,
**characterised in that**
the base plate (1) is connected to the undercarriage of the mobile part, in particular with the base plate (1) being connected to the upper side of the undercarriage, in particular being screw-connected by means of screws.

3. A mobile part according to one of the preceding claims,
**characterised in that**
one or more of the linear guides (6, 7, 8) can be fixed by means of a, in particular by means of a single, locking pin (9).

4. A mobile part according to one of the preceding claims,
**characterised in that**
the wheel receiving unit has an in particular concave receiving face for a wheel.

5. A mobile part according to claim 4,
**characterised in that**
the receiving face is made concave
and/or **in that**
the receiving face has rollers, so that the wheel which is received in the receiving face is rotatable in a substantially force-free manner about its wheel axis, as long as the wheel is not screw-connected to a shaft part of a motor vehicle.

6. A mobile part according to one of the preceding claims,
**characterised in that**
on that side of the wheel receiving unit (4) which faces away from the third linear guide (8), a limiting part (5) limits the wheel which is received in the receiving face, in particular in the axial direction, i.e. in the direction of the wheel axis.

7. A mobile part according to one of the preceding claims,
**characterised in that**
the mobile part has a secondary winding on its underside for contactless transmission of electric power from an elongate primary conductor laid on the floor, i.e. on the plane of travel, to the secondary winding.

8. A mobile part according to one of the preceding claims,
**characterised in that**
the mobile part has a control means with which a steering system and a travelling drive of the mobile part can be controlled.

9. A mobile part according to one of the preceding claims,
**characterised in that**
a handle bar (10) is securely connected to the wheel receiving unit (4).

10. A mobile part according to one of the preceding claims,
**characterised in that**
one of the linear guides (6, 7, 8), in particular the third linear guide (8), acts as a lifting device for the wheel receiving unit,
the lifting device having a counterweight, so that the positioning of the wheel receiving unit is made possible in a substantially force-free manner.

11. A method for mounting a wheel on a motor vehicle with the aid of a mobile part according to one of the preceding claims,
**characterised in that**
the mobile part transports a wheel received in the wheel receiving unit of the attachment module to the mounting region,
with the wheel being mounted on the motor vehicle, in particular on a shaft flange part of the motor vehicle, in the mounting region
- **in that** first of all a locking means, in particular a locking pin (9), is released,
- **in that** thereafter the wheel is displaced in a force-free manner to a position in which the wheel is flush with the axis of rotation of a shaft flange part,
- **in that** finally the wheel is mounted on the shaft flange part in particular by means of screw nuts and screws.

12. A method according to one of the preceding claims,
**characterised in that**
the locking means is monitored by means of a sensor and continued travel of the mobile part takes place dependent on the signal of the sensor.

## Revendications

1. Elément mobile, notamment élément mobile apte à se déplacer sur un sol et muni d'au moins un module rapporté disposé, en particulier monté sur ledit élément mobile,
lequel module rapporté comprend une platine d'embase (1) et une unité (4) réceptrice de roues,
un premier guidage linéaire (6) étant implanté sur la platine d'embase (1),
**caractérisé par le fait**
**qu'**un deuxième guidage linéaire (7) est agencé avec faculté de mouvement par rapport au premier guidage linéaire (6) ;
et par le fait que
l'unité réceptrice de roues est agencée avec mobilité par l'intermédiaire d'un troisième guidage linéaire (8)
agencé avec faculté de mouvement par rapport audit deuxième guidage linéaire (7), sachant que chacun des guidages linéaires (6, 7, 8) décrit un angle non évanescent, en particulier un angle droit avec chacun des autres guidages linéaires (6, 7, 8).

2. Elément mobile selon l'une des revendications précédentes,
**caractérisé par le fait que**
la platine d'embase (1) est reliée au châssis de roulement dudit élément mobile, sachant notamment que ladite platine d'embase (1) est reliée à la face supérieure dudit châssis de roulement, en particulier reliée par vissage au moyen de vis.

3. Elément mobile selon l'une des revendications précédentes,
**caractérisé par le fait**
**qu'**un ou plusieurs des guidages linéaires (6, 7, 8) peu(ven)t être bloqué(s) à demeure au moyen d'un téton d'arrêt, notamment d'un unique téton d'arrêt (9).

4. Elément mobile selon l'une des revendications précédentes,
**caractérisé par le fait que**
l'unité réceptrice de roues est pourvue d'une surface de réception notamment concave, destinée à une roue.

5. Elément mobile selon la revendication 4,
**caractérisé par le fait que**
la surface de réception est de réalisation concave ;
et/ou **par le fait que**
ladite surface de réception est dotée de rouleaux, de sorte que la roue logée dans ladite surface de réception peut être mise en rotation autour de son axe, pour l'essentiel avec absence de force, aussi longtemps que ladite roue n'est pas reliée, par vissage, à une partie d'arbre d'un véhicule automobile.

6. Elément mobile selon l'une des revendications précédentes,
**caractérisé par le fait que**,
du côté de l'unité (4) réceptrice de roues qui est tourné à l'opposé du troisième guidage linéaire (8), une partie de délimitation (5) délimite la roue logée dans la surface de réception, notamment dans le sens axial, c'est-à-dire dans la direction de l'axe de ladite roue.

7. Elément mobile selon l'une des revendications précédentes,
**caractérisé par le fait que**
ledit élément mobile est muni d'un enroulement secondaire, au niveau de sa face inférieure, en vue de la transmission sans contact d'une puissance électrique, audit enroulement secondaire, à partir d'un conducteur primaire de réalisation allongée qui est posé au sol, c'est-à-dire au niveau du plan de déplacement.

8. Elément mobile selon l'une des revendications précédentes,
**caractérisé par le fait que**
ledit élément mobile est pourvu d'une commande permettant de piloter un braquage et un entraînement en déplacement dudit élément mobile.

9. Elément mobile selon l'une des revendications précédentes,
**caractérisé par le fait**
**qu'**une barre de préhension (10) est reliée rigidement à l'unité (4) réceptrice de roues.

10. Elément mobile selon l'une des revendications précédentes,
**caractérisé par le fait que**
l'un des guidages linéaires (6, 7, 8), en particulier le troisième guidage linéaire (8), remplit la fonction d'un dispositif de levage de l'unité réceptrice de roues,
lequel dispositif de levage est nanti d'un contrepoids, de telle sorte que le positionnement de ladite unité réceptrice de roues soit rendu possible, pour l'essentiel avec absence de force.

11. Procédé de montage d'une roue sur un véhicule automobile à l'aide d'un élément mobile conforme à l'une des revendications précédentes,
**caractérisé par le fait que**
l'élément mobile transporte, vers la zone de montage, une roue logée dans l'unité réceptrice de roues du module rapporté,
sachant que, dans ladite zone de montage, ladite roue est montée sur le véhicule automobile, en particulier sur une partie de bridage d'arbre dudit véhicule automobile,
- en neutralisant tout d'abord un arrêt, notamment un téton d'arrêt (9),
- en déplaçant ensuite la roue, avec absence de force, vers un emplacement auquel ladite roue est alignée avec l'axe de rotation d'une partie de bridage d'arbre,
- en montant ladite roue sur ladite partie de bridage d'arbre, au stade final, en particulier au moyen d'écrous et de vis.

12. Procédé selon l'une des revendications précédentes,
**caractérisé par le fait que**
l'arrêt est surveillé au moyen d'un capteur, et une poursuite du déplacement de l'élément mobile a lieu en fonction du signal dudit capteur.
